# EUROPEAN PATENT SPECIFICATION

(11) **EP 4 298 294 B1**
(45) Date of publication and mention of the grant of the patent: **26.02.2025**
(21) Application number: 22712083.9
(22) Date of filing: 21.02.2022
(51) Int. Cl.: E04F 15/02

(54) **COUPLING SYSTEM FOR WOODEN PANELS FOR THE CONSTRUCTION OF REMOVABLE SPORTS FLOORING**
VERBINDUNGSSYSTEM FÜR HOLZPLATTEN ZUR HERSTELLUNG VON HERAUSNEHMBAREN SPORTBÖDEN
SYSTÈME DE COUPLAGE POUR PANNEAUX EN BOIS POUR LA CONSTRUCTION D'UN REVÊTEMENT DE SPORT AMOVIBLE

(30) Priority: 23.02.2021 IT 202100004193
(43) Date of publication of application: 03.01.2024
(73) Proprietor: DALLA RIVA SRL, 31031 Caerano San Marco (TV) (IT)
(72) Inventor: DALLA RIVA, Luigino, 31031 Caerano San Marco (TV) (IT)
(86) International application number: PCT/IT2022/050030
(87) International publication number: WO 2022/180653

(56) References cited:
- EP-A1- 1 602 837
- CN-A- 1 191 261
- DE-U1- 20 307 074
- FR-A1- 2 906 285

## Description

### Field of application

The invention which is the subject of the present patent application finds application in the sector of the construction of flooring, in particular in the production of removable parquet flooring intended for sports environments.

In particular, the present invention relates to a coupling system for wooden panels for making removable sports flooring.

### State of the art

A removable sports parquet is a type of flooring that can be assembled, disassembled, stored, transported, all this to meet the needs of customers, mainly sports clubs or federations who need to have a customized parquet on which to play but do not have a regular sports hall, or they play in arenas where other activities are also carried out such as, by way of example, concerts, fairs, etc.

The characteristics of the quality of a system for the construction of a removable sports parquet, in addition to the performance aspects regarding the sporting activity, can typically be summarized in assembly and disassembly speed, ease of assembly and disassembly operations, integrity of the elements in the assembly and disassembly phases, reduced manpower required, solidity and robustness for long-lasting use.

Notoriously, a conventionally removeable parquet consists of a series of panels mutually and solidly associated to form a sports flooring.

Typically each panel consists of a substantially flat surface with a rectangular shape and, therefore, is provided with a pair of long sides and a pair of short sides.

Conventionally, the association between the various panels takes place by means of coupling systems that can be divided into
- Coupling systems for cooperation of elements associated with the ends of the panels These coupling systems, for example coupling to rings and pins or spring coupling systems, substantially provide for the coupling of elements associated with the ends of the panels to be associated and the insertion of connection elements for the construction of the flooring.

For example, the patent application CN1191261 "SETTING STRUCTURE OF SETTING LAYING FLOOR MATERIAL" describes a system for connecting flooring panels, in particular heating panels for the construction of a floor heating system, said system comprising removable fixing means for fixing a panel to the adjacent panel.

According to what is reported in the aforementioned document, the system provides for the creation of a recess on the lower surface of a first panel, said recess being suitable for the insertion of an element with a concave longitudinal shape and the cooperation between the concave longitudinal shaped element with a longitudinal shaped plate.

In particular, the longitudinally shaped plate comprises a pair of convex lateral profiles which cooperate with the longitudinal concave slot of the concave longitudinal shaped element (20) inserted in the recess (22) giving the longitudinal shaped plate (18) a "U" shaped section.

Document FR2906285 describes a system for the construction of a removable floor, said system being substantially in an element having a "U"-shaped section equipped with lateral ends equipped with flaps, said element being able to be inserted between a panel and the adjacent panel; in particular, each side flap of the element is inserted into a recess obtained for the entire length of the panel on the long side or on the short side or on both.

The solutions described have the significant disadvantage that, due to the mechanical stress to which a sports floor is subjected, the friction effect between the connection element and the wooden surface with which the panel is made would inevitably lead to an instability over time of the set of associated panels. Consequently, in the area of association between the plate-like element and the concave element referred to in the document or between the connection element and the surface of the longitudinal recess referred to in the document, the tension could be such as to generate a detachment of the elements themselves or breakage of the wood to which they are associated, consequently creating a series of related problems for the stability of the entire flooring.
- Male / female systems

This type of coupling provides for the association of an element of the "male" type having a longitudinal connection plug associated, typically by gluing, to one of the long sides of the panel which engages an associated longitudinal recess, typically by gluing to one of the long sides of the corresponding panel, to create a "male / female" type coupling system.

Typically in these coupling systems, both the "male" type element and the "female" type element are made of metal to ensure the "male / female" association.

The substantial disadvantage of the solution described consists in the fact that in the "male / female" association area, the tension of the metal elements is such as to generate a detachment of the elements themselves and a break in the wood to which they are associated, consequently creating a series of problems regarding the stability of the entire flooring.

Also known to the state of the art are systems comprising a metal element associated with an end of a first panel, said metal element being substantially constituted by a quadrangular shape with a pair of long sides and a pair of short sides; in particular, the end of a long side comprises a flap with a bend on one end, said flap being inserted into a recess obtained by milling in the end of the long side of a second panel, thereby creating a "first panel/panel" association by association of the respective long sides.

These systems have the main disadvantage of generating cracks on the short side of the panels, as the coupling is fixed exclusively to the long side without elements that allow a sufficient hold to the short sides / heads of the panels.

A solution to the aforementioned disadvantage, known to the state of the art, and also implemented by the writer, consists in the realization of a metal coupling system, associated with a first panel and equipped with a sort of flap capable of being inserted into a milling made in the wood of a second panel.

However, even this described solution does not comprise the means for guaranteeing a sufficient hold on the panel heads.

To obviate what has been described above, it is known in the state of the art to also equip the short side of the panels / head with a coupling device that is completely similar to that applied to the long side of a first panel and cooperating with a milling made on the short side of the second panel.

Despite the solution of the head seal, the aforementioned system entails the disadvantage that, following a repeated series of assembly / disassembly of the system, the surface of the millings made in the wood of the panels over time is compromised by not ensuring sufficient engagement of the metal flap, both on the long side and on the short side of the associated panels.

In the state of the art, an alternative coupling system is also known which comprises a metal plate positioned at the centre of the long side of a first panel, said plate being equipped with a pair of conical pins suitable for be used in a corresponding pair of passage holes made in the long side of the second corresponding panel.

The aforementioned solution involves the significant disadvantage of wear, mainly by friction, of the wooden joint in which the conical pins are inserted, significantly reducing the stability and duration of the "first panel / second panel" association.

In particular, being a "pin" type connector, the surface where the connection is made is reduced; consequently the traction energy is substantially concentrated in a surface of a few millimetres with inevitable compromise of the interlocking hole, surface damage and lack of tightness of the connection.

In the state of the art, a coupling system is also known which comprises a plate positioned centrally on the long side, said plate being equipped with a pair of front flaps, a side flap positioned on the long right side and a side flap positioned on the long left side.

The application DE 203 07 074 U1 describes a temporary wooden floor for sports events and consists in plan-view of offset lines of wooden blocks presenting a flat gap-free surface. Long adjacent block sides are joined by concealed plastic fittings consisting of a flat strip (6) located in a matching groove under the floor surface and straddling the gap, with upward directed pins, engaging in both blocks. The short edges are joined by a metal pin embedded in a block side face with a protruding head. The head engages in a matching trap countersunk within the adjacent block.

According to DE 203 07 074 U1 the coupling system consists of a first plate associated with a first panel and a second plate associated with a second panel, said first plate and second plate having a quadrangular shape, the first plate consisting of a first surface to which a second surface is superimposed, the first plate made on plastic and the second plate made on metal. It thereby discloses the features of the preamble of claim 1.

The above solution also involves the significant disadvantage of wear, mainly by friction, of the wooden joint in which the 4 flaps are inserted, significantly reducing the stability and duration of the "first panel / second panel" association.

The purpose of the invention, which is the subject of the present patent application, is therefore to solve the disadvantages of the state of the art, in particular, by realizing a reversible coupling system between parquet panels for the construction of a flooring for sports use which is simple in the phase of the assembly of the flooring .

A further object of the invention, which is the subject of the present patent application, is to provide a solution to such diasadvantages, namely providing a reversible coupling system between parquet panels for the construction of a flooring for sports use which allows easy assembly.

A further object of the invention, which is the subject of the present patent application, is to provide a reversible coupling system between parquet panels for the construction of a flooring for sports use which maintains the integrity of the surface of the panels even after a large number of assembly/disassembly operations.

A further object of the invention, which is the subject of the present patent application, is to provide a reversible coupling system between parquet panels for the construction of a sports floor which allows a stable and safe association of the panels.

This, and further purposes, will be achieved by means of the coupling system for wooden panels as defined in claim 1, preferred features thereof being defined in the dependent claims.

### Brief description of the drawings

The invention, which is the subject of the present patent application, is shown in the attached Tables in which
Figure 1 top overall view of the coupling system object of the present patent application;
Figure 2 bottom overall view of the coupling system object of the present patent application;
Fig 3 top view of a first part of the coupling system object of the present patent application;
Fig 4 bottom view of a first part of the coupling system object of the present patent application;
Fig 5 top detail view of a first part of the coupling system object of the present patent application;
Fig 6 bottom detail view of a first part of the coupling system object of the present patent application;
Fig 7 bottom detail view of a first part of the coupling system object of the present patent application;
Fig 8 exemplification of a first part of the coupling system associated with a first panel;
Fig 9: overall view of a second part of the coupling system object of the present patent application;
Fig 10: overall view of a second part of the coupling system object of the present patent application;
Fig 11: detailed view of the side profile of the second part of the coupling system object of the present patent application;
Fig 12: view of the coupling system object of the present patent application associated with a pair of panels.
Fig 13: overall view of a series of panels equipped with the coupling system object of the present patent application.

### Detailed description

With reference to the attached Tables, the coupling system (1) object of the present patent application is made up of a first plate (1.1) and a second plate (1.2).

According to the invention object of the present patent application, at least a first plate (1.1) is associated with the long side of a first panel (20) and at least a second plate (1.2) is associated with a second panel (21) intended to be associated with the first panel (20).

According to the invention which is the subject of the present patent application, the first plate (1.1,

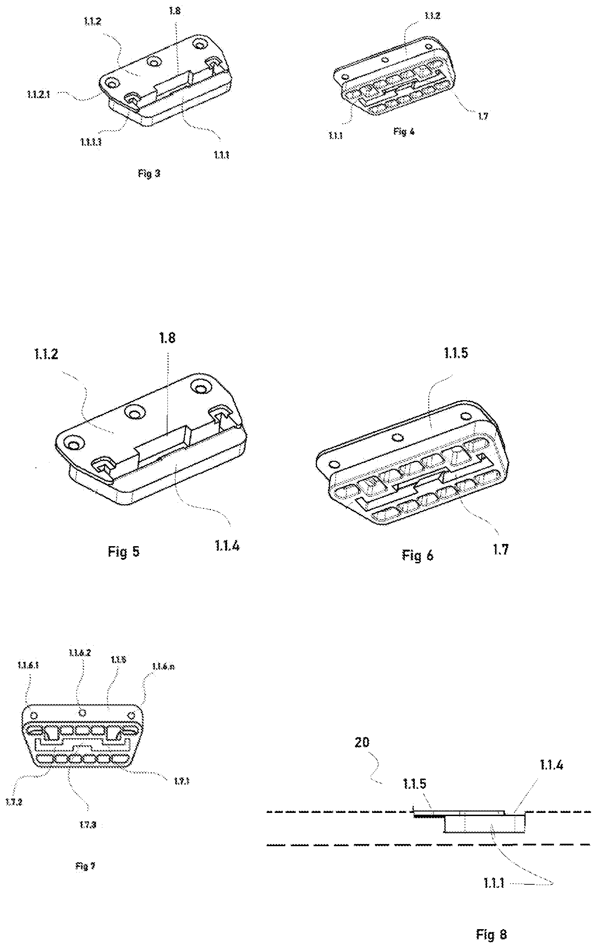

Fig 3-7) has a substantially quadrangular shape consisting of a first surface (1.1.1) and a second surface (1.1.2) superimposed on said first surface (1.1.1).

With reference to Fig 3, in particular the first surface (1.1.1) is constituted by a substantially quadrangular shape with a thickness (1.1.1.1); the second surface (1.2.1) is also constituted by a substantially quadrangular shape with a thickness (1.2.1.1) less than the thickness (1.1.1.1) of the first surface (1.1.1).

With particular reference to Fig 4, the first surface (1.1.1) has a transverse through connection cavity (1.7) which extends transversely with respect to the second surface (1.1.1).

According to the invention which is the subject of the present patent application, the transverse through connection cavity (1.7) is positioned on the first surface (1.1.1) in correspondence with the end of the second surface (1.1.2).

With particular reference to Fig 7, the transverse through connection cavity (1.7) has a pair of lateral sections (1.7.1, 1.7.2) and a central portion (1.7.3).

In a preferential, but not exclusive, realization, the internal surfaces of the lateral sections (1.7.1, 1.7.2) of the transverse through connection cavity (1.7) are orthogonal to the plane of the second surface (1.1.1)

In a preferential but not exclusive realization, the internal surface of the central portion (1.7.3) of the transverse through connection cavity (1.7) is inclined with respect to the first surface (1.1.1).

With particular reference to Fig 5 and Fig 6, the second surface (1.1.2) is superimposed and decentralized with respect to the first surface (1.1.1) to create in the first plate (1.1) a free anterior surface (1.1.4) and a free rear surface (1.1.5) which has (Fig 7) at least one series of through holes (1.1.6.1,1.1.6.n).

With reference to Fig 3 and Fig 5, the constrained end (1.8) of the second surface (1.1.3) has a specular conformation to the conformation of the transverse through connection cavity (1.7) of the first surface (1.1.1).

According to the invention, which is the subject of the present patent application, the first plate (1.1) is housed in a first panel (20).

In a preferential but not exclusive realization, the first panel (20) consists of a birch multi layer panel or a panel consisting of an odd number of layers of veneer glued together.

In particular (Fig 8) in the thickness of a first panel (20) a recess is obtained in which the first plate (1.1) is housed.

In particular, the first surface (1.1.1) of the first plate (1.1) is inserted in the recess obtained in the thickness of the first panel (20) so that the free rear surface (1.1.5) of the second surface (1.1.2) is flush with the upper surface of the first panel (20) while the free front surface (1.1.4) of the first surface (1.1.4) lies on a lower plane than the plane of the upper surface of the first panel (20) .

In order to ensure a correct association of the first plate (1.1) to the first panel (20), a series of association means, such as screws or the like, is inserted by insertion into the at least three through holes (1.1.6.1, 1.1.6.n) with which the rear free surface (1.1.5) is equipped.

In a preferential form, the first plate (1.1) made according to what was previously described is made of thermoplastic material.

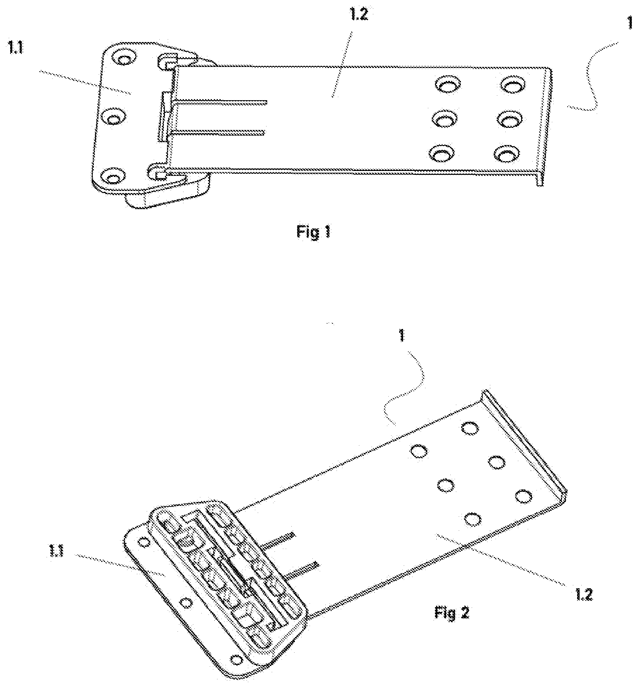

With reference to Fig 1, Fig 2, Fig 9 and Fig 10, the second plate (1.2) substantially consists of a quadrangular structure in metal material having a pair of long sides (1.2.1) and a pair of short sides (1.2. 2.1.1.2.2.2).

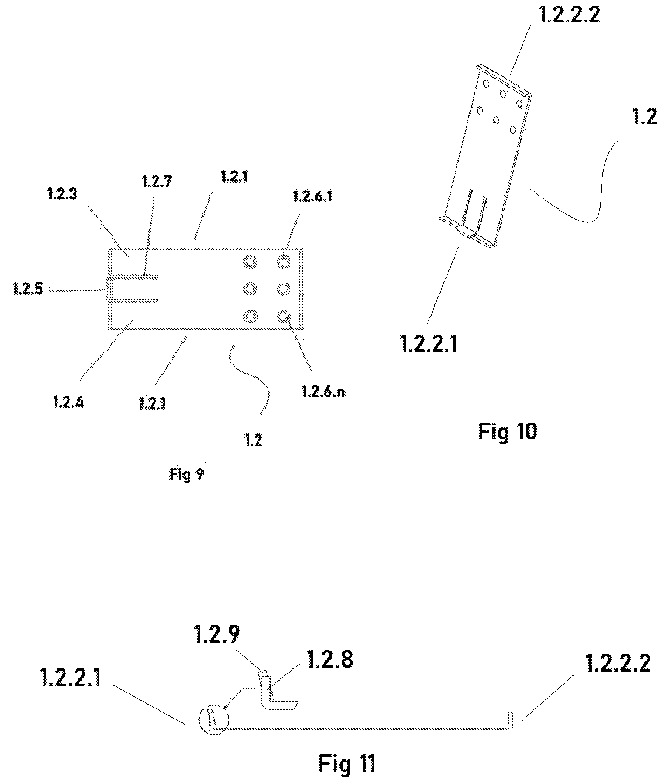

In particular, a first short side (1.2.2.1, Fig 9) has a pair of through slots (1.2.7) which generate three segments (1.2.3,1.2.4,1.2.5) separated hereinafter called "flaps" .

As previously described and with reference to Fig 9, the first short side (1.2.2.1) has two lateral flaps (1.2.3,1.2.4) and a central flap (1.2.5).

In particular, the free end of each lateral flap (1.2.3,1.2.4) has a fold (1.2.8) arranged at 90 ° with respect to the plane of the surface of the second plate (1.2).

In a preferential but not exclusive realization, the central flap (1.2.5) has an angle greater than 90 ° with respect to the plane of the surface of the second plate (1.2).

With reference to Fig 11, according to the invention object of the present patent application, the length of the fold (1.2.8) of each side flap (1.2.3,1.2.4) is less than the length of the fold (1.2.9) of the central flap (1.2.5).

According to the invention, which is the subject of the present patent application, the second short side (1.2.2.2) has a series of through holes (1.2.6.1,1.2.6.n);
According to the invention object of the present patent application, the free end of the second short side (1.2.2.2) has a fold with respect to the plane of the surface of the second plate (1.2) to create an edge (1.2.2.3).

In a preferential, but not exclusive, realization, the fold of the second short side is 90 °.

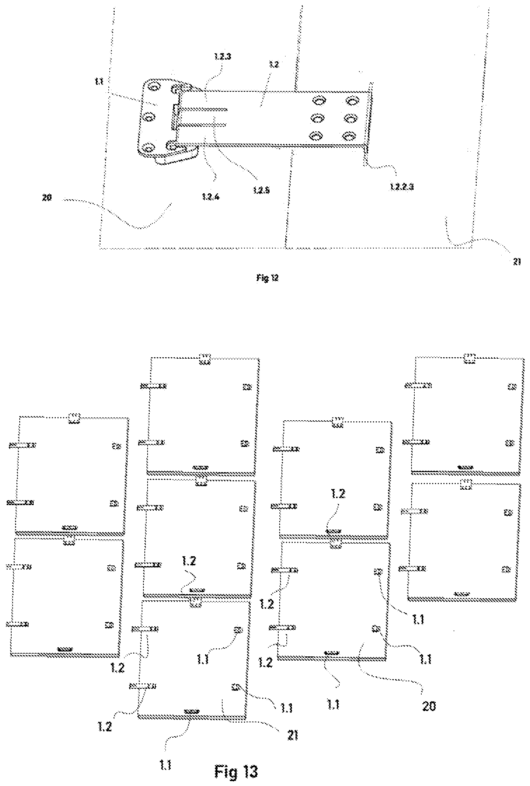

With reference to Fig 12, the edge (1.2.2.3) of the second short side (1.2.2.2) of the second plate (1.2), made according to what was previously described, is inserted into a transverse recess generated on a second panel (21).

In a preferential but not exclusive realization, the second panel (21) consists of a birch multi layer panel or a panel consisting of an odd number of layers of veneer, glued together.

For greater solidity of association, the second plate (1.2) is also associated with the surface of the second panel (21) by inserting suitable association means, such as screws, in the through holes 1.2.6.1,1.2.6.n).

According to the invention object of the present patent application, the second plate (1.2) engages the first plate (1.1) associated with the first panel (20).

In particular (Fig 1, Fig 2, Fig 12) each lateral flap (1.2.3,1.2.4) present on the first short side (1.2.2.1) of the second plate (1.2) inserts into the corresponding lateral section (1.7.1,1.7.2) of the transverse through connection slot (1. 7) of the first plate (1.1) and the central flap (1.2.5) inserts into the corresponding central portion (1.7.3) of the transverse through connection cavity (1.7) of the first plate (1.1) thus realising the association between the first panel (20) and the second panel (21).

According to the above, the coupling system (1) consisting of a first plate (1.1) and a second plate (1.2) made as described, allows the operator to associate the panels (20,21) more easily than the known solutions thanks to the simplicity of the cooperation system between the first (1.1) and the second plate (1.2).

In particular, the fact that the central flap (1.2.5), having a lower inclination than the inclination of the side flaps (1.2.3,1.2.4) and having a greater length than the length of the side flaps (1.2.3, 1.2.4), allows the insertion into the transverse through connection cavity (1.7) to take place initially by means of said central flap (1.2.5).

The inclination of the internal surface of the central portion (1.7.3) of the transverse through connection cavity (1.7) therefore acts as an opening for the central flap (1.2.5) allowing both an easy insertion of the side flaps (1.2.3, 1.2.4) is a simple removal.

In a preferential and non-limiting realization each panel (20,21, Fig 13) is equipped with:
- at least two second plates (1.2) associated with a long side;
- at least two first plates (1.1) associated with the opposite long side;
- at least a second plate (1.2) associated with a short side;
- at least one first plate (1.1) associated with the opposite short side.

According to the above, the coupling system object of the present patent application achieves the aforementioned purposes, in particular by realizing a panel association system which is simple for the operator and short-lived both regarding the assembly and regarding the disassembly phase.

The appropriate choice of materials, in particular the fact that the first plate (1.1) is made of plastic material, overcomes the disadvantages of the state of the art as regards the wear of the wood surface to which the system is associated.

Furthermore, the realization of the second plate (1.2) in metal material with a thickness such as not to be flexible, allows the disadvantages of the state of the art to be overcome thus avoiding bending phenomena and therefore avoiding the wear of the plate engagement surface.

## Claims

1. Coupling system for wooden panels for the construction of removable sports flooring, said coupling system (1) consisting of a first plastic plate (1.1) associated with a first panel (20) and a second metal plate (1.2) associated with a second panel (21), said first plate (1.1) and second plate (1.1) having a substantially quadrangular shape, the first plate (1.1) consisting of a first surface (1.1.2) to which a second surface (1.1.2) is superimposed, **characterized in that**:
the first surface ( 1.1.2) of the first plate (1.1) has a transverse through connection cavity (1.7) which is transversal to the second surface (1.1.1) said transverse through connection cavity (1.7) comprising a couple of side portions (1.7.1, 1.7.2) and a central portion (1.7.3),
the internal surfaces of the lateral sections (1.7.1, 1.7.2) of the transverse through connection cavity (1.7) are orthogonal to the plane of the second surface (1.1.1),
the internal surface of the central portion (1.7.3) of the transverse through connection cavity (1.7) is inclined with respect to the first surface (1.1.1),
the second plate (1.2) has a first short side (1.2.2.1) equipped with a pair of through slots (1.2.7) parallel to the plane of the second plate (1.2) to create two lateral segments (1.2.3, 1.2.4) and a central segment (1.2.5),
the second plate (1.2) engages the first plate (1.1) for insertion of the lateral segments (1.2.3,1.2.4) and of the central segment (1.2.5) present on the first short side (1.2.2.1) of the second plate ( 1.2) in the transverse through connection cavity (1.7) of the first plate (1.1),
each lateral segment (1.2.3,1.2.4) present on the first short side (1.2.2.1) of the second plate (1.2) is inserted in the corresponding lateral section (1.7.1,1.7.2) of transverse through connection cavity (1.7) of the first plate (1.1) and
the central segment (1.2.5) present on the first short side (1.2.2.1) of the second plate (1.2) fits into the corresponding central portion (1.7.3) of the transverse through connection cavity (1.7) of the first plate (1.1) thus connecting the first panel (20) and the second panel (21).

2. Coupling system as per claim 1 **characterized by** the fact that the second surface (1.1.2) of the first plate (1.1) is off-centre with respect to the first surface (1.1.1) of the first plate (1.1) to create a free anterior surface (1.1 .4) and a free rear surface (1.1.5).

3. Coupling system as per claim 2 **characterized in that** the free rear surface (1.1.5) of the first plate (1.1) has a series of through holes (1.1.6.1, 1.1.6.n).

4. Coupling system as per the preceding claims **characterized in that** the thickness of the first surface (1.1.1) of the first plate (1.1) is greater than the thickness of the second surface (1.1.1) of the first plate (1.1).

5. Coupling system as per the preceding claims, **characterized in that** the transverse through connection cavity (1.7) is positioned on the first surface (1.1.1) in correspondence with the engaged end of the second surface (1.1.2).

6. Coupling system as per the previous claims **characterized by** the fact that the-end (1.8) of the second surface (1.1.2) has a specular conformation to the conformation of the transverse through connection cavity (1.7) of the first surface (1.1.1) .

7. Coupling system as per claim 2 **characterized in that** the first surface (1.1.1) of the first plate (1.1) is inserted into a recess formed in the thickness of a first panel (20) so that the free rear surface (1.1 .5) of the second surface (1.1.2) is flush with the upper surface of the first panel (20) and that the free front surface (1.1.4) of the first surface (1.1.1) lies on a lower plane than the plane of the upper surface of the first panel (20).

8. System as per the previous claims **characterized in that** the free end of each lateral segment (1.2.3,1.2.4) of the first short side (1.2.2.1) of the second plate (1.2) has a fold (1.2.8) of 90 ° with respect to the plane of the surface of the second plate (1.2).

9. System as per the preceding claims **characterized in that** the free end of the central segment (1.2.5) of the first short side (1.2.2.1) of the second plate (1.2) has a groove (1.2.9) of an angle greater than 90 ° with respect to the plane of the surface of the second plate (1.2).

10. System as per the preceding claims, **characterized in that** the length of the fold (1.2.8) of each side segment (1.2.3,1.2.4) is less than the length of the fold (1.2.9) of the central segment (1.2.5 ).

11. System as per the preceding claims **characterized in that** the end of the second plate (1.2) opposite the first short side (1.2.2.1) has a series of through holes (1.2.6.1,1.2.6.n).

12. System as per the preceding claims **characterized by** the fact that the free end of the second short side (1.2.2.2) has a bend with respect to the plane of the surface of the second plate (1.2) to create an edge (1.2.2.3).

13. System as per the preceding claims, **characterized in that** the bending of the second short side (1.2.2.2) of the second plate (1.2) is 90 °.

14. System as per the preceding claims **characterized in that** the edge (1.2.2.3) of the second short side (1.2.2.2) of the second plate (1.2) is inserted into a transverse recess made in a second panel (21).

15. System as per the previous claims **characterized in that** each panel (20,21) is equipped with at least two second plates (1.2) associated with a long side, at least two first plates (1.1) associated with the opposite long side, at least a second plate (1.2) associated with a short side, at least one first plate (1.1) associated with the opposite short side.

16. System as per the preceding claims **characterized in that** each panel (20,21) consists of a multilayer panel.

## Patentansprüche

1. Kupplungssystem für Holzplatten zum Aufbau von abnehmbarem Sportboden, wobei das Kupplungssystem (1) eine erste Kunststoffplatte (1.1), die einer ersten Platte (20) zugeordnet ist, und eine zweite Metallplatte (1.2), die einer zweiten Platte (21) zugeordnet ist, umfasst, wobei die erste Platte (1.1) und die zweite Platte (1.1) eine im Wesentlichen viereckige Form aufweisen, wobei die erste Platte (1.1) aus einer ersten Oberfläche (1.1.2) besteht, an der eine zweite Oberfläche (1.1.2) überlagert ist, **dadurch gekennzeichnet, dass**:
die erste Oberfläche (1.1.2) der ersten Platte (1.1) einen quer zur zweiten Oberfläche (1.1.1) verlaufenden Querdurchgangsverbindungshohlraum (1.7) aufweist, der einen Paar von Seitenabschnitten (1.7.1, 1.7.2) und einen Mittelabschnitt (1.7.3) umfasst, die Innenflächen der seitlichen Abschnitte (1.7.1, 1.7.2) des Querdurchgangsverbindungshohlraums (1.7) orthogonal zur Ebene der zweiten Oberfläche (1.1.1) sind, die Innenfläche des Mittelabschnitts (1.7.3)
des Querdurchgangsverbindungshohlraums (1.7) gegenüber der ersten Oberfläche (1.1.1) geneigt ist), die zweite Platte (1.2) eine erste kurze Seite (1.2.2.1) aufweist, die mit einem Paar von Durchgangsschlitzen (1.2.7) parallel zur Ebene der zweiten Platte (1.2) ausgestattet ist, um zwei seitliche Segmente (1.2.3, 1.2.4) und ein zentrales Segment (1.2.5 ),
die zweite Platte (1.2) mit der ersten Platte (1.1) zum Einsetzen der seitlichen Segmente (1.2.3.1.2.4) und des auf der ersten kurzen Seite (1.2.2.1) der zweiten Platte (1.2) vorhandenen mittleren Segments (1.2.5) in Querrichtung durch den Verbindungshohlraum (1.7) der ersten Platte (1.1) in Eingriff steht,
jedes seitliche Segment (1.2.3.1.2.4), das auf der ersten kurzen Seite (1.2.2.1) der zweiten Platte (1.2) vorhanden ist, in den entsprechenden seitlichen Abschnitt (1.7.1.1.7.2) quer durch den Verbindungshohlraum (1.7) der ersten Platte (1.1) eingesetzt ist und das auf der ersten kurzen Seite (1.2.2.1) der zweiten Platte (1.2) vorhandene Mittelsegment (1.2.5) in den entsprechenden Mittelabschnitt (1.7.3) des Querdurchgangsverbindungshohlraums (1.7) der ersten Platte (1.1) passt, wodurch die erste Platte (20) und die zweite Platte (21).

2. Kupplungssystem nach Anspruch 1, **dadurch gekennzeichnet, dass** die zweite Oberfläche (1.1.2) der ersten Platte (1.1) bezüglich der ersten Oberfläche (1.1.1) der ersten Platte (1.1) aussermittig ist, um eine freie anteriore Fläche (1.1. 4) und einer freien Rückfläche (1.1.5 ).

3. Kupplungssystem nach Anspruch 2, **dadurch gekennzeichnet, dass** die freie Rückfläche (1.1.5) der ersten Platte (1.1) eine Reihe von Durchgangslöchern (1.1.6.1, 1.1.6.n) aufweist ).

4. Kupplungssystem nach den vorhergehenden Ansprüchen, **dadurch gekennzeichnet, dass** die Dicke der ersten Oberfläche (1.1.1) der ersten Platte (1.1) grösser als die Dicke der zweiten Oberfläche (1.1.1) der ersten Platte (1.1) ist).

5. Kupplungssystem nach den vorhergehenden Ansprüchen, **dadurch gekennzeichnet, dass** der Querdurchgangsverbindungshohlraum (1.7) auf der ersten Oberfläche (1.1.1) entsprechend dem eingerückten Ende der zweiten Oberfläche (1.1.2) positioniert ist ).

6. Kupplungssystem nach den vorhergehenden Ansprüchen, **dadurch gekennzeichnet, dass** das Ende (1.8) der zweiten Oberfläche (1.1.2) eine spiegelnde Konformation zur Konformation des Querdurchgangsverbindungshohlraums (1.7) der ersten Oberfläche (1.1.1) aufweist.

7. Kupplungssystem nach Anspruch 2, **dadurch gekennzeichnet, dass** die erste Oberfläche (1.1.1) der ersten Platte (1.1) in eine in der Dicke einer ersten Platte (20) ausgebildete Ausnehmung eingesetzt ist, so dass die freie Rückfläche (1.1. 5) der zweiten Oberfläche (1.1.2) bündig mit der Oberseite der ersten Platte (20) ist und dass die freie Stirnfläche (1.1.4) der ersten Fläche (1.1.1) in einer unteren Ebene liegt als die Ebene der Oberseite der ersten Platte (20).

8. System nach den vorhergehenden Ansprüchen, **dadurch gekennzeichnet, dass** das freie Ende jedes seitlichen Segments (1.2.3.1.2.4) der ersten kurzen Seite (1.2.2.1) der zweiten Platte (1.2) eine Falte (1.2.8) von 90° zur Ebene der Oberfläche der zweiten Platte (1.2) aufweist ).

9. System nach den vorhergehenden Ansprüchen, **dadurch gekennzeichnet, dass** das freie Ende des zentralen Segments (1.2.5) der ersten kurzen Seite (1.2.2.1) der zweiten Platte (1.2) eine Nut (1.2.9) mit einem Winkel grösser als 90° zur Ebene der Oberfläche der zweiten Platte (1.2) aufweist ).

10. System nach den vorhergehenden Ansprüchen, **dadurch gekennzeichnet, dass** die Länge der Falte (1.2.8) jedes Seitensegments (1.2.3.1.2.4) geringer ist als die Länge der Falte (1.2.9) des Mittelsegments (1.2.5 ).

11. System nach den vorhergehenden Ansprüchen, **dadurch gekennzeichnet, dass** das der ersten kurzen Seite (1.2.2.1) gegenüberliegende Ende der zweiten Platte (1.2) eine Reihe von Durchgangslöchern (1.2.6.1.1) aufweist. 2.6.n ).

12. System nach den vorhergehenden Ansprüchen, **dadurch gekennzeichnet, dass** das freie Ende der zweiten kurzen Seite (1.2.2.2) eine Biegung in Bezug auf die Ebene der Oberfläche der zweiten Platte (1.2) aufweist, um eine Kante (1.2.2.3) zu erzeugen ).

13. System nach den vorhergehenden Ansprüchen, **dadurch gekennzeichnet, dass** die Biegung der zweiten kurzen Seite (1.2.2.2) der zweiten Platte (1.2) 90° beträgt.

14. System nach den vorhergehenden Ansprüchen, **dadurch gekennzeichnet, dass** der Rand (1.2.2.3) der zweiten kurzen Seite (1.2.2.2) der zweiten Platte (1.2) in eine Querausnehmung in einer zweiten Platte (21) eingesetzt ist ).

15. System nach den vorhergehenden Ansprüchen, **dadurch gekennzeichnet, dass** jede Platte (20, 21) mit mindestens zwei zweiten Platten (1.2) ausgestattet ist, die einer langen Seite zugeordnet sind, mindestens zwei erste Platten (1.1), die der gegenüberliegenden Längsseite zugeordnet sind, mindestens eine zweite Platte (1.2), die einer kurzen Seite zugeordnet ist, mindestens eine erste Platte (1.1), die der gegenüberliegenden kurzen Seite zugeordnet ist.

16. System nach den vorhergehenden Ansprüchen, **dadurch gekennzeichnet, dass** jede Platte (20, 21) aus einer Mehrschichtplatte besteht.

## Revendications

1. Système d'accouplement pour panneaux en bois pour la construction d'un plancher de sport amovible, ledit système d'accouplement (1) maintenant une première plaque en plastique (1,1) associée à un premier panneau (20) et une seconde plaque métallique (1,2) associée à un second panneau (21), ladite première plaque (1,1) et ladite seconde plaque (1,1) ayant une forme sensiblement quadrangulaire, la première plaque (1,1) étant constituée d'une première surface (1.1.2) à laquelle une seconde surface (1.1.2) est superposée, **caractérisé en ce que** :
La première surface (1.1.2) de la première plaque (1,1) a une cavité de connexion traversante transversale (1,7) qui est transversale à la deuxième surface (1.1.1), ladite cavité de connexion traversante transversale (1,7) comprenant un couple de parties latérales (1.7.1, 1.7.2) et une partie centrale (1.7.3),
Les surfaces internes des sections latérales (1.7.1, 1.7.2) de la cavité de connexion traversante transversale (1,7) sont orthogonales au plan de la deuxième surface (1.1.1),
La surface interne de la partie centrale (1.7.3) de la cavité de connexion traversante transversale (1,7) est inclinée par rapport à la première surface (1.1.1 ),
La deuxième plaque (1,2) a un premier côté court (1.2.2.1) équipé d'une paire de fentes traversantes (1.2.7) parallèles au plan de la deuxième plaque (1,2) pour créer deux segments latéraux (1.2.3, 1.2.4) et un segment central (1.2.5 ),
La seconde plaque (1,2) vient en prise avec la première plaque (1,1) pour l'insertion des segments latéraux (1.2.3.1.2.4) et du segment central (1.2.5) présent sur le premier côté court (1.2.2.1) de la seconde plaque (1,2) dans la cavité de connexion traversante transversale (1,7) de la première plaque (1,1 ),
chaque segment latéral (1.2.3.1.2.4) présent sur le premier côté court (1.2.2.1) de la deuxième plaque (1,2) est inséré dans la section latérale correspondante (1.7.1.1.7.2) de la cavité de connexion traversante transversale (1,7) de la première plaque (1,1) et le segment central (1.2.5) présent sur le premier côté court (1.2.2.1) de la deuxième plaque (1,2) s'ajuste dans la partie centrale correspondante (1.7.3) de la cavité de connexion traversante transversale (1,7) de la première plaque (1,1) connectant ainsi le premier panneau (20) et le deuxième panneau (21 ).

2. Système de couplage selon la revendication 1, e la seconde surface (1.1.2) de la première plaque (1,1) est décentrée par rapport à la première surface (1.1.1) de la première plaque (1,1) pour créer une surface antérieure libre (1,1. 4) et une surface arrière libre (1.1.5 ).

3. Système de couplage selon la revendication 2, e la surface arrière libre (1.1.5) de la première plaque (1,1) a une série de trous traversants (1.1.6.1, 1.1.6.n ).

4. Système de couplage selon les revendications précédentes, e l'épaisseur de la première surface (1.1.1) de la première plaque (1,1) est supérieure à l'épaisseur de la deuxième surface (1.1.1) de la première plaque (1,1 ).

5. Système de couplage selon les revendications précédentes, **caractérisé en ce que** la cavité de connexion traversante transversale (1,7) est positionnée sur la première surface (1.1.1) en correspondance avec l'extrémité engagée de la seconde surface (1.1.2 ).

6. Système de couplage selon les revendications précédentes, e l'extrémité (1,8) de la deuxième surface (1.1.2) a une conformation spéculaire à la conformation de la cavité de connexion traversante transversale (1,7) de la première surface (1.1.1).

7. Système de couplage selon la revendication 2, e la première surface (1.1.1) de la première plaque (1,1) est insérée dans un évidement formé dans l'épaisseur d'un premier panneau (20) de sorte que la surface arrière libre (1,1. 5) de la deuxième surface (1.1.2) affleure la surface supérieure du premier panneau (20) et en ce que la surface avant libre (1.1.4) de la première surface (1.1.1) repose sur un plan inférieur au plan de la surface supérieure du premier panneau (20).

8. Système selon les revendications précédentes, e l'extrémité libre de chaque segment latéral (1.2.3, 1.2.4) du premier côté court (1.2.2.1) de la deuxième plaque (1,2) a un pli (1.2.8) de 90 ° par rapport au plan de la surface de la deuxième plaque (1,2 ).

9. Système selon les revendications précédentes, e l'extrémité libre du segment central (1.2.5) du premier côté court (1.2.2.1) de la deuxième plaque (1,2) a une rainure (1.2.9) d'un angle supérieur à 90 ° par rapport au plan de la surface de la deuxième plaque (1,2 ).

10. Système selon les revendications précédentes, e la longueur du pli (1.2.8) de chaque segment latéral (1.2.3, 1.2.4) est inférieure à la longueur du pli (1.2.9) du segment central (1.2.5 ).

11. Système selon les revendications précédentes, **caractérisé en ce que** l'extrémité de la seconde plaque (1,2) opposée au premier côté court (1.2.2.1) a une série de trous traversants (1.2.6.1,1. 2. 6.n ).

12. Système selon les revendications précédentes, e l'extrémité libre du second côté court (1.2.2.2) a un coude par rapport au plan de la surface de la seconde plaque (1,2) pour créer un bord (1.2.2.3 ).

13. Système selon les revendications précédentes, e la flexion du second côté court (1.2.2.2) de la seconde plaque (1,2) est de 90 °.

14. Système selon les revendications précédentes, **caractérisé en ce que** le bord (1.2.2.3) du second côté court (1.2.2.2) de la seconde plaque (1,2) est inséré dans un évidement transversal réalisé dans un second panneau (21 ).

15. Système selon les revendications précédentes, e chaque panneau (20, 21) est équipé d'au moins deux secondes plaques (1,2) associées à un côté long, au moins deux premières plaques (1,1) associées au côté long opposé, au moins une seconde plaque (1,2) associée à un côté court, au moins une première plaque (1,1) associée au côté court opposé.

16. Système selon les revendications précédentes, e chaque panneau (20, 21) est constitué d'un panneau multicouche.
